# EUROPÄISCHE PATENTSCHRIFT

(11) **EP 1 404 539 B1**
(45) Veröffentlichungstag und Bekanntmachung des Hinweises auf die Patenterteilung: **31.10.2012**
(21) Anmeldenummer: 02729797.7
(22) Anmeldetag: 16.03.2002
(51) Int. Cl.: G06T 7/00, G06T 7/20, B60K 31/00, B60R 21/015, G08G 1/16

(54) **VERFAHREN UND VORRICHTUNG ZUR BEEINFLUSSUNG WENIGSTENS EINES PARAMETERS EINES FAHRZEUGES**
METHOD AND DEVICE FOR INFLUENCING AT LEAST ONE PARAMETER ON A VEHICLE
PROCEDE ET DISPOSITIF POUR INFLUENCER AU MOINS UN PARAMETRE D'UN VEHICULE

(30) Priorität: 28.06.2001 DE 10131198
(43) Veröffentlichungstag der Anmeldung: 07.04.2004
(73) Patentinhaber: ROBERT BOSCH GMBH, 70442 Stuttgart (DE)
(72) Erfinder: STILLER, Christoph, 76275 Ettlingen (DE)
(86) Internationale Anmeldenummer: PCT/DE2002/000963
(87) Internationale Veröffentlichungsnummer: WO 2003/002366

(56) Entgegenhaltungen:
- EP-A- 1 034 984
- US-A- 5 314 037
- US-A- 5 528 698
- US-B1- 6 198 998
- FRANKE U ET AL: "Real-time stereo vision for urban traffic scene understanding" PROCEEDINGS OF THE IEEE INTELLIGENT VEHICLES SYMPOSIUM 2000 (CAT. NO.00TH8511), PROCEEDINGS OF IV 2000 INTELLIGENT VEHICLES SYMPOSIUM, DEARBORN, MI, USA, 3-5 OCT. 2000, Seiten 273-278, XP002207017 2000, Piscataway, NJ, USA, IEEE, USA ISBN: 0-7803-6363-9 in der Anmeldung erwähnt
- BERTOZZI M ET AL: "A REAL TIME ORIENTED SYSTEM FOR VEHICLE DETECTION" JOURNAL OF SYSTEMS ARCHITECTURE, ELSEVIER SCIENCE PUBLISHERS BV., AMSTERDAM, NL, Bd. 43, Nr. 1/5, 1. März 1997 (1997-03-01), Seiten 317-325, XP000679771 ISSN: 1383-7621
- TOCK D ET AL: "Tracking and measuring drivers' eyes", IMAGE AND VISION COMPUTING ELSEVIER NETHERLANDS, vol. 14, no. 8, August 1996 (1996-08), pages 541-547, XP007912561, ISSN: 0262-8856

## Beschreibung

### Technisches Gebiet

Die Erfindung betrifft ein Verfahren und eine Vorrichtung zur Beeinflussung wenigstens eines Parameters eines Fahrzeuges.

### Stand der Technik

Aus der Druckschrift IEEE Intelligent Vehicles Symposium, Okt. 2000, "Real-time stereo vision for for urban traffic scene understanding", U. Franke ist bekannt, das Umfeld eines Fahrzeuges mit einer Bildaufzeichnungseinheit zu erfassen, die zur Aufnahme dreidimensionaler Bilder eine Stereokamera umfasst. Durch Auswertung der aufgenommenen Szene kann die Position, beispielsweise weiterer Fahrzeuge, Personen oder Gegenstände, im Umfeld des Fahrzeuges ermittelt werden. Anhand dieser Informationen kann die Längs- und/oder Querführung des Fahrzeuges durch einen Regler beeinflusst werden, so dass der Fahrer bei der Fahrzeugführung unterstützt wird und der Fahrkomfort und die Verkehrssicherheit verbessert werden können. Beispielsweise kann im Falle einer drohenden Kollision ein automatisches Ausweich- oder Bremsmanöver die Kollision vermeiden oder wenigstens die Kollisionsenergie reduzieren.

Bekannt ist ferner, das Umfeld eines Fahrzeuges mittels einer Radareinrichtung, einer Lidareinrichtung oder mittels Ultraschallsensoren zu überwachen. Vorgeschlagen ist bereits ferner, zur Umfeldüberwachung eines Fahrzeuges eine Präzisionssatellitenortung (DGPS/INS) einzusetzen.

Aus der US-PS 5,983,147 ist bekannt, mit einer Videosensorik, insbesondere mit einer Stereokamera, die Szene eines Beifahrersitzes eines Kraftfahrzeuges zu überwachen. Durch Auswertung der aufgenommenen Szene wird ermittelt, ob der Beifahrersitz belegt ist. Wird eine Belegung des Beifahrersitzes festgestellt, lässt sich ferner ermitteln, ob sich darauf eine große Person (Erwachsener) oder eine kleine Person (Kind) oder ein sonstiger Gegenstand befindet. In Abhängigkeit dieser gewonnenen Erkenntnisse kann die Ansteuerung eines Beifahrerairbags beeinflusst werden. Bekanntermaßen birgt die Auslösung eines Airbags, insbesondere für kleine Personen - aufgrund der relativ geringen Entfernung zum Airbag - erhebliche Verletzungsrisiken bei Auslösung des Airbags. Durch das aus der US-PS 5,983,147 bekannte Verfahren kann bei Erkennen eines Kopf-/Brustbereiches eines Beifahrers im Airbagentfaltungsbereich entschieden werden, ob bei einer Unfallsituation der Beifahrerairbag nicht - oder nicht vollständig - ausgelöst werden soll.

Somit ist bekannt, über eine Überwachung des Umfeldes eines Fahrzeuges aktive Sicherheitssysteme des Fahrzeuges, beispielsweise Lenkung, Bremse, Gas oder dergleichen, zu beeinflussen und über eine Überwachung des Fahrzeuginnenraumes passive Sicherheitssysteme, beispielsweise Airbag, Gurtstraffer oder dergleichen, zu beeinflussen. Zwischen diesen bekannten Funktionen zur aktiven und passiven Sicherheit treten unerwünschte Wechselwirkungen auf. Beispielsweise kann durch einen aktiven Bremseingriff vor einer drohenden Kollision wegen der Massenträgheitskraft eine Vorverlagerung der Insassen innerhalb des Fahrzeuges erfolgen, wodurch der Kopf-/Brustbereich der Fahrzeuginsassen in den Airbagentfaltungsbereich gelangen kann. Im ungünstigen Einzelfall kann sich deshalb die Gefährdung des Insassen durch das aktive Bremsmanöver sogar erhöhen.

Die EP 1034984 A2 zeigt verschiedene Anwendungsprogramme, die ein Datenmodell zum Bestimmen gewünschter Fahrzeugzustände in Verbindung mit der vergangenen, gegenwärtigen oder zukünftigen Umgebung des Fahrzeugs bestimmen. Dabei werden bei dem Datenmodell auch Objekte in der Umgebung des Kraftfahrzeugs verwendet. Es wird dabei lediglich die Bestimmung von Kinematiken von Objekten in der Umgebung des Kraftfahrzeugs, die berechnet und vorhergesagt werden, beschrieben.

Tock et al.: "Tracking and measuring drivers' eyes" Image and Vision Computing Elsevier Netherlands, Bd. 14, Nr. 8, August 1996, Seiten 541 bis 547, XP007912561 beschreibt ein System zur Fahrerüberwachung auf Müdigkeitserscheinungen, bei dem die Augen des Fahrers verfolgt werden und die Öffnung der Lider gemessen wird. Die Verfolgung ("tracking" der Augen basiert auf einer Kalman-Filter-Architektur, wobei die Position der Augen zu einem späteren Zeitpunkt geschätzt wird.

### Darstellung der Erfindung, Aufgabe, Lösung, Vorteile

Der Erfindung liegt daher die Aufgabe zugrunde, ein Verfahren und eine Vorrichtung der gattungsgemäßen Art zu schaffen, mit denen in einfacher Weise die aktive und passive Insassensicherheit verbessert werden können. Erfindungsgemäß wird diese Aufgabe durch ein Verfahren mit den im Anspruch 1 genannten Merkmalen gelöst. Dadurch, dass ein 15 Fahrzeugumfeld auf den Eintritt wenigstens eines relevanten Ereignisses überwacht wird, ein Fahrzeuginnenraum auf die Ist-Position wenigstens einer Person überwacht wird, bei Eintritt des wenigstens einen relevanten Ereignisses und bei Erkennen der Ist-Position dem Ereignis beziehungsweise der Ist-Position entsprechende Signale einer Auswerteeinrichtung zugeführt werden, und die Auswerteeinrichtung wenigstens ein aktives und/oder passives Sicherheitssystem des Fahrzeuges in Abhängigkeit des wenigstens einen erkannten relevanten Ereignisses und der erkannten Ist-Position der wenigstens einen Person ansteuert, ist vorteilhaft möglich, die Auslösung aktiver und passiver Sicherheitsmaßnahmen miteinander zu kombinieren. Insbesondere wird hierdurch erreicht, dass nicht mehr zwischen aktiver und passiver Sicherheitsmaßnahme unterschieden wird, sondern die Insassensicherheit durch einen koordinierten Eingriff auf aktive und passive Sicherheitssysteme gewährleistet wird. Hierdurch wird die gegenseitige Beeinflussung aktiver und passiver Sicherheitsfunktionen einerseits vorhersehbar und damit beherrschbar und andererseits gezielt nutzbar.

Erfindungsgemäß wird die Aufgabe ferner durch eine Vorrichtung mit den im Anspruch 15 genannten Merkmalen gelöst. Dadurch, dass die Vorrichtung wenigstens eine Einrichtung zur Überwachung eines Fahrzeugumfeldes und wenigstens eine Einrichtung zur Überwachung eines Fahrzeuginnenraumes umfasst, eine Auswerteeinrichtung zum Auswerten von von den Überwachungseinrichtungen gelieferten Signalen, die dem Eintritt eines relevanten Ereignisses im Fahrzeugumfeld und der Ist-Position wenigstens einer Person im Fahrzeuginnenraum entsprechen, vorgesehen ist, wobei die Auswerteeinrichtung Mittel umfasst, mittels denen in Abhängigkeit der Überwachungssignale wenigstens ein aktives und/oder passives Sicherheitssystem koordiniert ansteuerbar ist, wird vorteilhaft erreicht, dass an sich bekannte, in modernen Fahrzeugen regelmäßig vorhandene Fahrzeugkomponenten derart miteinander verknüpfbar sind, dass mit minimalem Aufwand eine koordinierte automatische Ansteuerung von aktiven und passiven Sicherheitssystemen möglich wird. Hierdurch wird die Insassensicherheit, insbesondere in Abhängigkeit eines im Fahrzeugumfeld eingetretenen relevanten Ereignisses und gleichzeitiger Berücksichtigung einer Ist-Position einer Person innerhalb des Fahrzeuginnenraumes, optimal gewährleistet.

Weitere bevorzugte Ausgestaltungen der Erfindung ergeben sich aus den übrigen, in den Unteransprüchen genannten Merkmalen.

### Kurze Beschreibung der Zeichnungen

Nachstehend wird die Erfindung in einem Ausführungsbeispiel anhand der beigefügten Zeichnungen näher erläutert. Es zeigen:
- Fig. 1: eine schematische Draufsicht auf ein Fahrzeug und
- Fig. 2: ein Flussdiagramm des erfindungsgemäßen Verfahrens.

### Bester Weg zur Ausführung der Erfindung

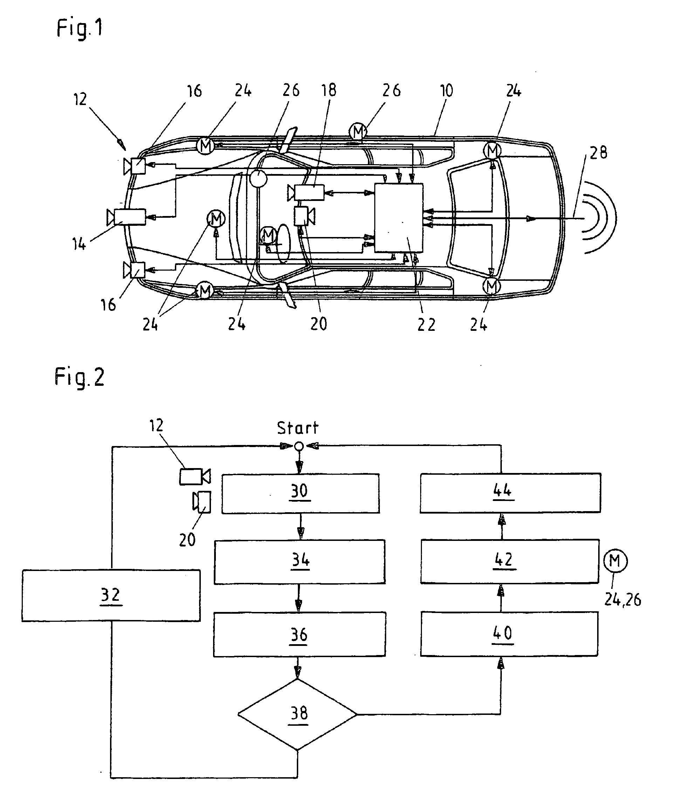

Fig. 1 zeigt schematisch in Draufsicht ein Kraftfahrzeug 10, das eine insgesamt mit 100 bezeichnete Vorrichtung zur Beeinflussung wenigstens eines Parameters des Kraftfahrzeuges 10 umfasst. Die Vorrichtung 100 besitzt eine insgesamt mit 12 bezeichnete Einrichtung zur Überwachung eines Fahrzeugumfeldes. Die Einrichtung 12 besitzt beispielsweise als Komponenten einen im Wesentlichen auf der Fahrzeuglängsachse angeordneten, weitblickenden Radarsensor 14, im linken beziehungsweise rechten vorderen Seitenbereich angeordnete - einen Nahbereich abdekkende - Radarsensoren 16 sowie eine vorzugsweise im Dachbereich angeordnete Bilderfassungseinrichtung 18, die beispielsweise als Stereo-Video-Sensor ausgebildet ist. Die Einrichtung 12 mit ihren Sensoren 14, 16 und 18 ist in an sich bekannter Weise dafür ausgelegt, das Fahrzeugumfeld zu überwachen, um das Vorhandensein weiterer Fahrzeuge, Personen und/oder Gegenstände zu detektieren.

Die Vorrichtung 100 umfasst ferner eine Einrichtung 20, die beispielsweise als Bilderfassungseinrichtung, insbesondere als Stereo-Video-Sensor, ausgebildet ist. Mittels der Einrichtung 20 kann in ebenfalls an sich bekannter Weise ein Fahrzeuginnenraum überwacht werden und die Ist-Position von Personen, beispielsweise auf einen Fahrersitz, auf einem Beifahrersitz und/oder auf einer Rücksitzbank, detektiert werden.

Die einzelnen Komponenten der Einrichtungen 12 und 20 sind mit einer Auswerteeinrichtung 22 verbunden, die im Einzelnen nicht dargestellte Prozessoren, Speicherelemente und dergleichen umfasst. Die Einrichtung 12 liefert hierbei Überwachungssignale des Fahrzeugumfeldes an die Auswerteeinrichtung 22, wobei bei Eintritt eines relevanten Ereignisses im Fahrzeugumfeld, beispielsweise das Erkennen eines Fahrzeuges, einer Person und/oder eines Gegenstandes, von der Auswerteeinrichtung 22 ein entsprechendes Ereignissignal generiert wird.

Gleichzeitig werden von der Auswerteeinrichtung 22 die von der Einrichtung 20 gelieferten Signale überwacht und bei Erkennen einer Ist-Position wenigstens einer Person im Kraftfahrzeuginnenraum ein dieser Ist-Position entsprechendes Positionssignal generiert.

Die Ereignissignale und die Positionssignale werden in der Auswerteeinrichtung 22 in noch zu erläuternder Weise miteinander verknüpft.

Die Auswerteeinrichtung 22 ist ferner mit Stellgliedern 24, beispielsweise elektrisch, hydraulisch und/oder pneumatisch arbeitende Stellglieder, verbunden, über die eine Steuerung eines Antriebes, einer Bremse, einer Lenkung erfolgen kann. Die Stellglieder 24 sind also zu einer Beeinflussung aktiver Sicherheitssysteme des Kraftfahrzeuges 10 geeignet. Die Auswerteeinrichtung 22 ist ferner mit Stellgliedern 26 verbunden, über die passive Sicherheitssysteme des Kraftfahrzeuges 10, beispielsweise Airbagmodule, Gurtstraffer oder dergleichen, ansteuerbar sind.

Die Auswerteeinrichtung 22 ist ferner mit einer Kommunikationseinrichtung 28 verbunden, über die eine Kommunikation des Kraftfahrzeuges 10 mit weiteren Kraftfahrzeugen und/oder einer übergeordneten Zentrale möglich ist.

Die Darstellung in Fig. 1 erfolgt lediglich schematisch und erhebt keinen Anspruch auf Vollständigkeit. So kann sowohl die Einrichtung 12 als auch die Einrichtung 20 weitere, zur Überwachung des Fahrzeugumfeldes beziehungsweise des Fahrzeuginnenraumes geeignete Komponenten aufweisen. Insbesondere kann auch vorgesehen sein, dass einzelne Komponenten zu einer Baueinheit integriert sind. So können beispielsweise die Bilderfassungseinrichtung 18 und die Bilderfassungseinrichtung der Einrichtung 20 und die Auswerteeinrichtung 22 in ein gemeinsames Modul integriert sein, das beispielsweise im Dachbereich des Kraftfahrzeuges 10 angeordnet ist.

Anhand von Fig. 2 wird das erfindungsgemäße Verfahren zur Beeinflussung wenigstens eines Parameters des Kraftfahrzeuges 10 näher erläutert.

Nach einem Start des Verfahrens, der beispielsweise durch Anlassen einer Antriebsmaschine des Kraftfahrzeuges 10 ausgelöst werden kann, werden in einem ersten Schritt 30 die Beobachtungssignale der Einrichtung 12 zur Überwachung des Fahrzeugumfeldes und die Positionssignale der Einrichtung 20 zur Überwachung des Fahrzeuginnenraumes erfasst. Vorteilhaft ist vorgesehen, dass die Ansteuerung der Komponenten der Einrichtungen 12 beziehungsweise 20 durch die Auswerteeinrichtung 22 erfolgt, so dass die aus den erfassten Signalen von der Auswerteinheit 22 als besonders relevant eingestuften Ereignisse zielgerichtet weiterverfolgt werden können. Ferner lassen sich so vorteilhaft die von einer der Komponenten der Einrichtungen 12 und/oder 20 erkannten Ereignisse durch Abgleich mit den Signalen einer weiteren Komponente der gleichen Einrichtung 12 beziehungsweise 14 verifizieren.

Im Schritt 30 kann der Auswerteeinrichtung 22 ferner gleichzeitig über die Kommunikationseinrichtung 28 als Information 32 der Fahrzeugzustand weiterer, sich im Umfeld des Kraftfahrzeuges 10 befindender Fahrzeuge mitgeteilt werden. Die Auswerteeinrichtung 22 verfügt somit über Kenntnisse, die das Vorhandensein von Fahrzeugen, Personen und/oder Gegenständen im Fahrzeugumfeld, die die Ist-Position von Fahrzeuginsassen und gegebenenfalls das Fahrverhalten von sich im Fahrzeugumfeld befindenden weiteren Fahrzeugen betreffen.

In einem nächsten Schritt 34 wird anhand dieser Kenntnisse die Kinematik der sich im Umfeld des Kraftfahrzeuges 10 befindenden Fahrzeuge, Personen und/oder Gegenstände und der Fahrzeuginsassen unter Berücksichtigung der geplanten Eigenbewegung des Kraftfahrzeuges 10 prädiziert. Hierbei können beispielsweise Kaimanfilter mit kinematischen Systemgleichungen verwendet werden (wie diese beispielsweise aus "Estimation and Tracking - Principles, Techniques and Software" Artech House, 1995, Y. Bar-Shalom and X.-R. Li bekannt sind). Diese kinematischen Systemgleichungen können durch die Informationen 32, die die Trajektorien weiterer Fahrzeuge betreffen, ergänzt werden.

In einem nächsten Schritt 36 werden die Kinematik des eigenen Kraftfahrzeuges 10 sowie der Fahrzeuginsassen sowie die Kinematik weiterer Fahrzeuge 10 im Fahrzeugumfeld hinsichtlich der aktuellen Ist-Sicherheitssituation bewertet. Ein Bewertungsmaßstab ist hierbei beispielsweise die sich aus den vorhandenen Informationen ergebene so genannte time-to-contact aller Fahrzeuge, Personen und/oder Objekte im Umfeld des Kraftfahrzeuges 10 mit dem Kraftfahrzeug 10. Diese "time-to-contact" definiert die Zeit, die vergeht, bis sich die prädizierte Trajektorie eines Fahrzeuges, einer Person und/oder eines Objektes im Umfeld des Kraftfahrzeuges 10 mit der des Kraftfahrzeuges 10 schneidet. Somit kann der Kollisionszeitpunkt mit einem Fahrzeug, Person und/oder Objekt im Umfeld des Kraftfahrzeuges 10 anhand der momentanen Kinetik der jeweils beteiligten Partner ermittelt werden. Unterschreitet diese ermittelte Zeit (time-to-contact) einen vorgebbaren Schwellwert, erfolgt eine Entscheidung 38, ob wenigstens ein Parameter des Kraftfahrzeuges 10 zur Optimierung einer Insassensicherheit beeinflusst werden soll. Wird anhand der Entscheidung 38 festgelegt, dass die Insassensicherheit optimal gewährleistet ist, erfolgt kein Eingriff und die eigenen Fahrzeugparameter werden über die Kommunikationseinrichtung 28 weiteren interessierten Fahrzeugen mitgeteilt. Ergibt die Entscheidung 38 ("Sicherheit ohne Eingriff?"), dass die Beeinflussung wenigstens eines Parameters des Kraftfahrzeuges 10 erfolgen muss, wird die Information ebenfalls über die Kommunikationseinrichtung 28 als eigene prädizierte Trajektorie an umliegende interessierte Fahrzeuge kommuniziert. Diese Fahrzeuge können dann (sofern die entsprechende Ausrüstung vorhanden ist) ihre eigene Sicherheit entsprechend des dort ablaufenden Verfahrens zur Beeinflussung wenigstens eines Parameters des Fahrzeuges abschätzen und entsprechende Gegenmaßnahmen, nämlich wenigstens einen Parameter des Fahrzeuges zu beeinflussen, auslösen.

Ferner wird bei Unterschreiten des vorgebbaren Schwellwertes der Schritt 40 aktiviert, indem anhand der momentanen Situation bestimmt wird, welche Beeinflussung welchen Parameters des Kraftfahrzeuges 10 zur Optimierung der Fahrzeuginsassensicherheit ausgelöst werden kann. Die Beeinflussung wenigstens eines Parameters des Kraftfahrzeuges 10 führt zu der Ausführung eines Fahrmanövers des Kraftfahrzeuges 10, mit dem Ziel, die Kollision mit einem Fahrzeug, Person und/oder Gegenstand im Umfeld des Kraftfahrzeuges 10 zu verhindern beziehungsweise die Kollisionsenergie maximal zu vermindern, wobei gleichzeitig das Verletzungsrisiko von Fahrzeuginsassen durch passive Sicherheitseinrichtungen (Airbag, Gurtstraffer oder dergleichen) berücksichtigt wird.

Als mögliche physikalische Fahrmanöver können beispielsweise in eine engere Auswahl genommen werden:
- Vollbremsung aller Räder mit maximalem Bremsdruck bei Festhalten des aktuellen Lenkwinkels;
- Vollbremsung aller Räder mit maximalem Bremsdruck bei Geradeauslenkung;
- Maximaler Lenkeinschlag nach links, so dass die erreichbare Querbeschleunigung nicht überschritten wird, bei Freilauf der Räder;
- Maximaler Lenkeinschlag nach recht, so dass die erreichbare Querbeschleunigung nicht überschritten wird, bei Freilauf der Räder;
- Minimaler Lenkeinschlag nach rechts oder links, so dass ein Objekt mit größter Kollisionsgefahr nicht berührt wird, bei gleichzeitig größtmöglichem Bremsdruck;
- Fortsetzen der derzeitigen Stellung von Bremse und des zuletzt geplanten Manövers.

Diese Aufzählung erhebt keinen Anspruch auf Vollständigkeit und kann selbstverständlich andere geeignete physikalische Fahrmanöver umfassen.

Für jedes der physikalisch möglichen Fahrmanöver wird unter dem Gesichtpunkt der Optimierung der Fahrzeugsicherheit anhand der bereits erläuterten Kriterien die Trajektorie von Fahrzeugen, Personen und/oder Objekten im Umfeld des Fahrzeuges und die Trajektorie von Fahrzeuginsassen im Innenraum des Kraftfahrzeuges 10 prädiziert. Für den Fall, dass eines der Manöver zu einer prädizierten Vorverlagerung eines Insassen - beispielsweise in den Airbagentfaltungsbereich hinein - führt, wird das entsprechende Manöver durch eine Ansteuerung der passiven Sicherheitssysteme (Gurtstraffer oder dergleichen) ergänzt und neu berechnet. Ist eine Vorverlagerung des Fahrzeuginsassen (durch Überprüfung der Ist-Position durch die Einrichtung 20 bekannt) bereits eingetreten, wird die verbleibende Zeit berechnet, die noch bis zu einer optimalen Auslösung des Airbags verbleibt. Liegt diese Zeit unterhalb einer Auslöseschwelle, wird das entsprechende Manöver um eine Aktivierung des Airbags ergänzt. Unter Berücksichtigung der Ist-Position des Fahrzeuginsassen kann hierbei auch eine Teilaktivierung des Airbags oder eine Deaktivierung des Airbags in Frage kommen, um so Verletzungsrisiken für Fahrzeuginsassen durch eine Airbagentfaltung zu minimieren. Gegebenenfalls wird hierbei die Deaktivierung beziehungsweise Teilaktivierung des Airbags mit einer prädizierten Kollisionsrichtung und/oder Kollisionsenergie des Kraftfahrzeuges 10 abgeglichen. Ziel ist in jedem Fall, die Insassensicherheit des Kraftfahrzeuges 10 zu optimieren, indem ein koordiniertes Ansteuern beziehungsweise Auslösen der zur Verfügung stehenden aktiven und passiven Sicherheitssysteme des Kraftfahrzeuges 10 erfolgt.

In einem nächsten Schritt 42 wird aus den zuvor bestimmten, möglichen Fahrmanövern das Fahrmanöver ausgewählt, bei dem eine minimale Verletzungsschwere der Fahrzeuginsassen erwartet wird. Für eine derartige Berechnung der Verletzungsschwere aus der Trajektorie der beteiligten Partner sind Verfahren allgemein bekannt. Beispielsweise wird die erwartete Verletzungsschwere durch die größte Beschleunigung herangezogen, die für einen Fahrzeuginsassen während 3 ms erreicht wird. Ergibt die Bestimmung, dass kein kollisionsfreies Fahrmanöver möglich ist, so wird das Fahrmanöver mit minimaler erwarteter Verletzungsschwere für die Fahrzeuginsassen ausgewählt. Entsprechend dieser Auswahl werden im Schritt 42 Stellbefehle an die Stellglieder 24 und/oder 26 ausgelöst.

Mit der Auslösung eines Fahrmanövers mit minimaler Verletzungsschwere kann vorzugsweise gleichzeitig ein Notruf (über Kommunikationseinrichtung 28) ausgelöst werden und/oder es wird eine Insassenwarneinrichtung (zum Beispiel akustisch und/oder visuell) aktiviert.

Gleichzeitig wird in einem Schritt 44 das ausgewählte Fahrmanöver und die sich hieraus ergebende Trajektorie als Schleife dem Schritt wieder zugeführt, so dass das Verfahren zur Beeinflussung wenigstens eines Parameters des Kraftfahrzeuges 10 zyklisch abläuft. Gleichzeitig kann das ausgewählte Fahrmanöver über die Kommunikationseinrichtung 28 weiteren, im Umfeld des Kraftfahrzeuges 10 sich befindenden Fahrzeugen und/oder einer übergeordneten Zentrale zur Beachtung mitgeteilt werden.

Durch die zyklische Abarbeitung der Situationserfassung und der sich hieraus ergebenden Auswahl eines Fahrmanövers zur optimalen Fahrzeuginsassensicherheit lässt sich das eingeleitete Manöver fortlaufend überprüfen und anhand sich ändernder Bedingungen, insbesondere der nunmehr veränderten Trajektorie des Kraftfahrzeuges 10 und das Verhältnis dieser Trajektorie zu in Trajektorien erkannter Fahrzeuge, Personen und/oder Gegenstände im Umfeld beziehungsweise von Fahrzeuginsassen im Fahrzeuginnenraum, an die tatsächliche Situation adaptieren und gegebenenfalls korrigieren.

## Patentansprüche

1. Verfahren zur Beeinf ussung wenigstens eines Parameters eines Fahrzeugs bei weldiem ein Fahrzeugumfeld auf den Eintritt wenigstens eines relevanten Ereignisses überwacht wird, ein Fahrzeuginnenraum auf die Ist-Position wenigstens einer Person überwacht wird, bei Eintritt des wenigstens einen relevanten Ereignisses und bei Erkennen der Ist-Position dem Ereignis bzw. der Ist-Position entsprechende Signale einer Auswerteeinheit (22) zugeführt werden, wobei eine Kinematik von im Fahrzeugumfeld detektierten Fahrzeugen, Personen und/oder Gegenständen prädiziert wird, die Auswerteeinrichtung (22) die prädizierte Kinematiken hinsichtlich der Sicherheitssituation bewertet und die Auswerteeinrichtung (22) wenigstens ein aktives und/oder passives Sicherheitssystem des Fahrzeugs (10) in Abhängigkeit des wenigstens einen erkannten relevanten Ereignisses, der erkannten Ist-Position der wenigstens einen Person sowie der Bewertung der prädizierten Kinematiken ansteuert, **dadurch gekennzeichnet**, daβ eine Kinematik von Fahrzeuginsassen prödiziert wird.

2. Verfahren nach Anspruch 1,
**dadurch gekennzeichnet, dass**
als relevantes Ereignis das Erkennen eines Fahrzeuges, einer Person und/oder eines Gegenstandes im Fahrzeugumfeld überwacht wird.

3. Verfahren nach einem der vorhergehenden Ansprüche,
**dadurch gekennzeichnet, dass**
die Auswerteeinrichtung (22) Komponenten von Überwachungseinrichtungen (12, 20) zum Erkennen der relevanten Ereignisse und der Ist-Position steuert.

4. Verfahren nach einem der vorhergehenden Ansprüche,
**dadurch gekennzeichnet, dass**
die Auswerteeinrichtung (22) die den relevanten Ereignissen und den Ist-Positionen entsprechenden Signale miteinander verknüpft.

5. Verfahren nach Anspruch 4,
**dadurch gekennzeichnet, dass**
zusätzlich der Fahrzeugzustand weiterer sich im Fahrzeugumfeld befindlicher Fahrzeuge berücksichtigt wird.

6. Verfahren nach Anspruch 1,
**dadurch gekennzeichnet, dass**
als Bewertungsmaßstab eine "time-to-contact" verwendet wird.

7. Verfahren nach einem der vorhergehenden Ansprüche,
**dadurch gekennzeichnet, dass**
bei Unterschreiten eines vorgebbaren Schwellwertes der Ist-Sicherheitssituation zur Ausübung eines physikalischen Fahrmanövers des Fahrzeuges bestimmt wird, welcher Parameter des Fahrzeuges zur Optimierung der Fahrzeuginsassensicherheit beeinflusst wird.

8. Verfahren nach Anspruch 7,
**dadurch gekennzeichnet, dass**
als Parameter des Fahrzeuges eine Bremse und/oder eine Lenkung und/oder eine Beschleunigung und/oder ein Airbag und/oder ein Gurtstraffer beeinflusst wird.

9. Verfahren nach einem der vorhergehenden Ansprüche,
**dadurch gekennzeichnet, dass**
für die bestimmten physikalischen Fahrmanöver jeweils die Trajektorie von Fahrzeugen, Personen und/oder Objekten im Fahrzeugumfeld, die Trajektorie des eigenen Fahrzeuges und die Trajektorie von Fahrzeuginsassen prädiziert wird.

10. Verfahren nach einem der vorhergehenden Ansprüche,
**dadurch gekennzeichnet, dass**
aus den bestimmten physikalischen Fahrmanövern das Fahrmanöver ausgewählt und ausgeführt wird, bei dem eine minimale Verletzungsschwere der Fahrzeuginsassen erwartet wird.

11. Verfahren nach einem der vorhergehenden Ansprüche,
**dadurch gekennzeichnet, dass**
die Trajektorie des ausgeführten Fahrmanövers bei der Bewertung der aktuellen Ist-Sicherheitssituation berücksichtigt wird.

12. Verfahren nach einem der vorhergehenden Ansprüche,
**dadurch gekennzeichnet, dass**
mit der Ausführung des Fahrmanövers ein Notruf und/oder eine Insassenwarneinrichtung aktiviert wird.

13. Vorrichtung zur Beeinflussung wenigstens eines Parameters eines Fahrzeugs (10) mit wenigstens einer Einrichtung (12) zur Überwachung eines Fahrzeugsumfelds, mit wenigstens einer Einrichtung (20) zur Überwachung eines Fahrzeuginnenraums, mit einer Auswerteeinrichtung (22) zum Auswerten von von den Überwachungseinrichtungen (14, 16, 18) gelieferten Signalen, die dem Eintritt wenigstens eines relevanten Ereignisses im Fahrzeugumfeld und der Ist-Position wenigstens einer Person im Fahrzeuginnenraum entsprechen, wobei die Auswerteeinrichtung (22) Mittel umfasst, mittels derer eine Kinematik von im Fahrzeugumfeld detektierten Fahrzeugen, Personen und/oder Gegenständen prädiziert wird, die prädizierte Kinematiken hinsichtlich der Sicherheitssituation bewertet und wenigstens ein aktives und/oder passives Sicherheitssystem des Fahrzeugs (10) in Abhängigkeit des wenigstens einen erkannten relevanten Ereignisses, der erkannten Ist-Position der wenigstens einen Person sowie der Bewertung der prädizierten Kinematiken angesteuert werden, **dadurch gekennzeichnet**, daβ eine Kinematik von Fahrenginsassen prödiziert wird.

14. Vorrichtung nach Anspruch 13,
**dadurch gekennzeichnet, dass**
die Einrichtung (12) einen weitblickenden Radarsensor (14) und/oder einen nahblickenden Radarsensor (16) und/oder eine Bilderfassungseinrichtung (18), insbesondere einen Stereo-Video-Sensor, umfasst.

15. Vorrichtung nach Anspruch 13,
**dadurch gekennzeichnet, dass**
die Einrichtung (20) eine Bilderfassungseinrichtung (18), insbesondere einen Stereo-Video-Sensor, umfasst.

16. Vorrichtung nach Anspruch 13,
**dadurch gekennzeichnet, dass**
zumindest einzelne der Komponenten der Einrichtungen (12 und 20) und die Auswerteeinrichtung (22) zu einer Baueinheit integriert sind.

17. Vorrichtung nach Anspruch 13,
**dadurch gekennzeichnet, dass**
die Auswerteeinrichtung (22) mit Stellgliedern (24, 26) zur Auslösung beziehungsweise Beeinflussung aktiver und passiver Sicherheitssysteme des Fahrzeuges (10) verbunden ist.

## Claims

1. Method for influencing at least one parameter of a vehicle, in which a vehicle environment is monitored for the occurrence of at least one relevant event, a passenger compartment of the vehicle is monitored for the actual position of at least one person, and when the at least one relevant event occurs and when the actual position is detected signals corresponding to the event and/or the actual position are fed to an evaluation unit (22), wherein kinematics of vehicles, persons and/or objects detected in the vehicle environment are predicted, the evaluation device (22) evaluates the predicted kinematics with respect to the safety situation, and the evaluation device (22) actuates at least one active and/or passive safety system of the vehicle (10) as a function of the at least one detected relevant event, the detected actual position of the at least one person and the evaluation of the predicted kinematics, **characterized in that** kinematics of vehicle occupants are predicted.

2. Method according to Claim 1,
**characterized in that**
the detection of a vehicle, of a person and/or of an object in the vehicle environment is monitored as a relevant event.

3. Method according to one of the preceding claims,
**characterized in that**
the evaluation device (22) controls components of monitoring devices (12, 20) for detecting the relevant events and the actual position.

4. Method according to one of the preceding claims,
**characterized in that**
the evaluation device (22) links the signals corresponding to the relevant events and the actual positions to one another.

5. Method according to Claim 4,
**characterized in that**
in addition the vehicle state of further vehicles located in the vehicle environment is taken into account.

6. Method according to Claim 1,
**characterized in that**
a time-to-contact is used as an evaluation criterion.

7. Method according to one of the preceding claims,
**characterized in that**
when a predefinable threshold value of the actual safety situation is undershot it is determined, for the purpose of carrying out a physical driving manoeuvre of the vehicle, what parameter of the vehicle is influenced in order to optimize the safety of the occupants of the vehicle.

8. Method according to Claim 7,
**characterized in that**
a brake and/or a steering system and/or acceleration and/or an airbag and/or a seatbelt pretensioner are/is influenced as parameters of the vehicle.

9. Method according to one of the preceding claims,
**characterized in that**
for the specific physical driving manoeuvres, in each case the trajectory of vehicles, persons and/or objects in the vehicle surroundings, the trajectory of the driver's own vehicle and the trajectory of the vehicle occupants are predicted.

10. Method according to one of the preceding claims,
**characterized in that**
the driving manoeuvre for which a minimum severity of injury of the vehicle occupants is expected is selected from the specific physical driving manoeuvres and executed.

11. Method according to one of the preceding claims,
**characterized in that**
the trajectory of the executed driving manoeuvre is taken into account in the evaluation of the current actual safety situation.

12. Method according to one of the preceding claims,
**characterized in that**
an emergency call and/or a vehicle occupant warning device is activated when the driving manoeuvre is executed.

13. Apparatus for influencing at least one parameter of a vehicle (10) with at least one device (12) for monitoring a vehicle environment, with at least one device (20) for monitoring a passenger compartment of the vehicle, with an evaluation device (22) for evaluating signals which are supplied by the monitoring devices (14, 16, 18) and which correspond to the occurrence of at least one relevant event in the vehicle environment and to the actual position of at least one person in the passenger compartment of the vehicle, wherein the evaluation device (22) comprises means by means of which kinematics of vehicles, persons and/or objects detected in the vehicle environment are predicted, the predicted kinematics are evaluated with respect to the safety situation and at least one active and/or passive safety system of the vehicle (10) is actuated as a function of the at least one detected relevant event, the detected actual position of the at least one person and the evaluation of the predicted kinematics, **characterized in that** kinematics of vehicle occupants are predicted.

14. Apparatus according to Claim 13,
**characterized in that**
the device (12) comprises a wide-view radar sensor (14) and/or a close-range radar sensor (16) and/or an image-capturing device (18), in particular a stereo video sensor.

15. Apparatus according to Claim 13,
**characterized in that**
the device (20) comprises an image-capturing device (18), in particular a stereo video sensor.

16. Apparatus according to Claim 13,
**characterized in that**
at least some of the components of the devices (12 and 20) and the evaluation device (22) are integrated to form one structural unit.

17. Apparatus according to Claim 13,
**characterized in that**
the evaluation device (22) is connected to actuator elements (24, 26) for triggering and/or influencing active and passive safety systems of the vehicle (10).

## Revendications

1. Procédé pour influencer au moins un paramètre d'un véhicule, dans lequel un environnement du véhicule est surveillé pour vérifier la survenue d'au moins un événement significatif, un habitacle du véhicule est surveillé pour vérifier la position réelle d'au moins une personne, des signaux correspondant à l'événement et/ou à la position réelle étant envoyés à une unité d'analyse (22) en cas de survenue de l'au moins un événement significatif et en cas de détection de la position réelle, à la suite de quoi une cinématique des véhicules, personnes et/ou objets détectés dans l'environnement du véhicule est prédite, le dispositif d'analyse (22) analysant les cinématiques prédites en rapport avec la situation de sécurité et le dispositif d'analyse (22) commandant au moins un système de sécurité actif et/ou passif du véhicule (10) en fonction de l'au moins un événement significatif reconnu, de la position réelle reconnue de l'au moins une personne ainsi que de l'analyse des cinématiques prédites, **caractérisé en ce qu'**une cinématique des occupants du véhicule est produite.

2. Procédé selon la revendication 1, **caractérisé en ce que** l'événement significatif surveillé est la reconnaissance d'un véhicule, d'une personne et/ou d'un objet dans l'environnement du véhicule.

3. Procédé selon l'une quelconque des revendications précédentes, **caractérisé en ce que** le dispositif d'analyse (22) commande des composantes des dispositifs de surveillance (12, 20) en vue de reconnaître les événements significatifs et la position réelle.

4. Procédé selon l'une quelconque des revendications précédentes, **caractérisé en ce que** le dispositif d'analyse (22) associe entre eux les signaux correspondant aux événements significatifs et aux positions réelles.

5. Procédé selon la revendication 4, **caractérisé en ce qu'**en sus de l'état du véhicule, les autres véhicules se trouvant dans l'environnement du véhicule sont pris en compte.

6. Procédé selon la revendication 1, **caractérisé en ce que** le système de mesure utilisé pour l'analyse est le « time-to-contact », soit le temps restant avant contact.

7. Procédé selon l'une quelconque des revendications précédentes, **caractérisé en ce qu'**en cas de passage en dessous d'une valeur seuil prédéfinie, la situation de sécurité réelle est définie pour réaliser une manoeuvre de conduite physique du véhicule influençant les paramètres du véhicule en vue d'optimiser la sécurité des occupants du véhicule.

8. Procédé selon la revendication 7, **caractérisé en ce que** les paramètres utilisés pour influencer le véhicule sont un frein et/ou une colonne de direction et/ou une accélération et/ou un airbag et/ou une ceinture de sécurité.

9. Procédé selon l'une quelconque des revendications précédentes, **caractérisé en ce que** la trajectoire des véhicules, personnes et/ou objets se trouvant dans l'environnement du véhicule, la trajectoire du véhicule lui-même et la trajectoire des occupants du véhicule sont respectivement prédites pour effectuer la manoeuvre de conduite physique déterminée.

10. Procédé selon l'une quelconque des revendications précédentes, **caractérisé en ce que** la manoeuvre de conduite pour laquelle un degré de blessure minimal des occupants du véhicule est attendu est sélectionnée et effectuée parmi les manoeuvres de conduite physiques déterminées.

11. Procédé selon l'une quelconque des revendications précédentes, **caractérisé en ce que** la trajectoire de la manoeuvre de conduite effectuée est prise en compte dans l'analyse de la situation de sécurité réelle actuelle.

12. Procédé selon l'une quelconque des revendications précédentes, **caractérisé en ce qu'**un appel d'urgence et/ou un dispositif d'avertissement des passagers sont activés avec la réalisation de la manoeuvre de conduite.

13. Dispositif pour influencer au moins un paramètre d'un véhicule (10) équipé d'au moins un dispositif (12) de surveillance d'un environnement du véhicule, d'au moins un dispositif (20) de surveillance d'un habitacle du véhicule, d'un dispositif d'analyse (22) servant à analyser les signaux envoyés par les dispositifs de surveillance (14, 16, 18) correspondant à la survenue d'au moins un événement significatif dans l'environnement du véhicule et à la position réelle d'au moins une personne dans l'habitacle du véhicule, le dispositif d'analyse (22) comprenant des moyens permettant de prévoir une cinématique des véhicules, personnes et/ou objets détectés dans l'environnement du véhicule, d'analyser les cinématiques prédites en rapport avec la situation de sécurité et de commander au moins un système de sécurité actif et/ou passif du véhicule (10) en fonction de l'au moins un événement significatif reconnu, de la position réelle reconnue de l'au moins une personne ainsi que de l'analyse des cinématiques prédites, **caractérisé en ce qu'**une cinématique des occupants du véhicule est prédite.

14. Dispositif selon la revendication 13, **caractérisé en ce que** le dispositif (12) comprend un capteur radar (14) conçu pour voir au loin et/ou un capteur radar (16) conçu pour voir de près et/ou un dispositif de prise d'images (18), notamment un capteur de vidéo stéréo.

15. Dispositif selon la revendication 13, **caractérisé en ce que** le dispositif (20) comprend un dispositif de prise d'images (18), notamment un capteur de vidéo stéréo.

16. Dispositif selon la revendication 13, **caractérisé en ce qu'**au moins quelques-uns des composants des dispositifs (12 et 20) et le dispositif d'analyse (22) sont intégrés à une unité de construction.

17. Dispositif selon la revendication 13, **caractérisé en ce que** le dispositif d'analyse (22) est relié à des maillons de réglage (24, 26) permettant de déclencher et/ou d'influencer les systèmes de sécurité actifs et passifs du véhicule (10).
